# FASCICULE DE BREVET EUROPEEN

(11) **EP 4 193 423 B1**
(45) Date de publication et mention de la délivrance du brevet: **29.01.2025**
(21) Numéro de dépôt: 21739070.7
(22) Date de dépôt: 30.06.2021
(51) Int. Cl.: H01Q 1/22, G06K 19/077

(54) **MODULE ELECTRONIQUE POUR CARTE CONTENANT AU MOINS UNE ANTENNE ET SON PROCEDE DE FABRICATION**
ELEKTRONISCHES MODUL FÜR EINE KARTE MIT MINDESTENS EINER ANTENNE UND HERSTELLUNGSVERFAHREN DAFÜR
ELECTRONIC MODULE FOR A CARD CONTAINING AT LEAST ONE ANTENNA AND MANUFACTURING METHOD THEREOF

(30) Priorité: 04.08.2020 FR 2008259
(43) Date de publication de la demande: 14.06.2023
(73) Titulaire: Smart Packaging Solutions, 13790 Rousset (FR)
(72) Inventeur: DAUPHIN, François, 13790 ROUSSET (FR); CALVAS, Bernard, 13790 ROUSSET (FR); MEAR, Benjamin, 13790 ROUSSET (FR)
(74) Mandataire: Tranvouez, Edern Morgan
(86) Numéro de dépôt international: PCT/EP2021/068024
(87) Numéro de publication internationale: WO 2022/028783

(56) Documents cités:
- EP-A1- 2 892 012
- EP-A1- 3 059 698
- US-A1- 2013 062 419
- US-A1- 2015 269 471

## Description

L'invention concerne un module électronique pour carte contenant au moins une antenne et son procédé de fabrication. Le module électronique peut être intégré dans une carte de transaction sans contact, une carte à fonctionnement mixte ou « carte dual » comprenant une fonction avec contact et une fonction sans contact.

L'invention s'applique quel que soit le matériau utilisé pour réaliser les connexions, des fils d'or, des fils en aluminium ou tout autre matériau apte à réaliser les connexions requises entre un circuit intégré (puce) et une antenne ou entre un circuit intégré et un ou plusieurs puits de liaison ou puits de « bonding ».

Le module électronique selon l'invention peut être utilisé dans tout dispositif portatif, tel qu'une carte, dans le domaine identitaire, les transports, le domaine bancaire, le contrôle d'accès, la santé et aussi dans le domaine des télécommunications.

Le module électronique intégré dans une carte à puce comprend généralement un circuit imprimé muni d'une puce ou circuit intégré, et des moyens de communication permettant la transmission des données de la puce à un dispositif de lecteur de carte. Les moyens de transmission des données sont constitués, par exemple, d'une ou de plusieurs antennes et/ou d'un connecteur.

Une carte à puce à contact comportera un connecteur pour la lecture des informations de la carte par un lecteur adapté, le connecteur comprenant des contacts électriquement connectés à la puce. Ces contacts sont constitués de pistes métalliques conductrices en surface du support pour réaliser une connexion par contact électrique avec le dispositif de lecteur de carte.

Une carte à puce sans contact, comporte une ou plusieurs antennes connectées directement, ou via une antenne dite antenne « booster », à un dispositif lecteur de carte.

Une carte à puce dual comporte les deux fonctions pour échanger des données et les deux types de connexions précitées.

L'un des problèmes rencontrés dans la fabrication de modules électroniques destinés à être insérés dans des cartes, ou dans tout autre support équivalent, est notamment la hauteur des fils de connexion reliant l'antenne enfouie au sein de la carte et la puce contenue dans cette dernière.

Une autre difficulté rencontrée résulte de la connexion d'un ou plusieurs plots de la puce avec des puits de bonding. Les plots de connexion de la puce ou du circuit intégré ayant une implantation déterminée, ainsi que l'implantation des puits de bonding vis-à-vis des contacts en surface du support, peuvent conduire à des fils de connexion croisés ou à la présence de fils trop longs.

Les documents EP2892012, US2013/062419, US2015/269471 et EP3059698 divulguent un module électronique comportant un plot intermédiaire de connexion.

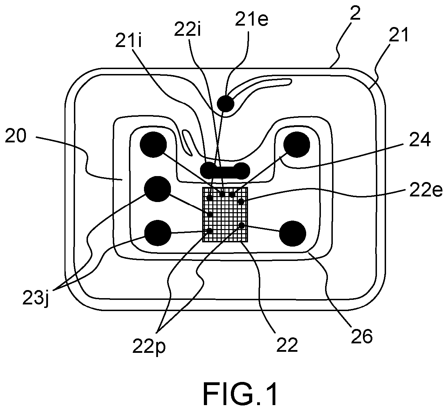

Comme il est illustré à la figure 1, dans certaines configurations, des fils utilisés pour la connexion entre une antenne et un circuit intégré vont « s'entrecroiser ».

Il est connu un module électronique 1 comprenant un substrat sur lequel on dépose une ou plusieurs pistes conductrices formant une antenne. Les pistes conductrices comportent une première extrémité formant l'extrémité interne de l'antenne et une deuxième extrémité formant l'extrémité externe de l'antenne. Une puce est reliée via des plots de connexion 12p, à l'extrémité interne de l'antenne, à l'extrémité externe de l'antenne et à des puits de bonding. La technique utilisée est une technique de câblage de fils de connexion plus connue sous l'expression anglo-saxonne « wire bond ». Dans l'art antérieur, les fils de connexion 14 se croisent.

L'idée de la présente invention repose sur une nouvelle approche pour la fabrication d'un module électronique et la structure du module en résultant, qui consiste notamment à utiliser un ou plusieurs plots intermédiaires de connexion disposés « à l'intérieur de l'antenne » et qui permettent de réaliser les connexions électriques nécessaires. La présence de ces plots de connexion intermédiaires permet de minimiser la longueur des fils de connexion et/ou d'éviter que les fils de connexion se croisent.

L'expression « disposé à l'intérieur » de l'antenne signifie dans la présente invention qu'un plot dit « intermédiaire » va se trouver disposé sur le support d'antenne à l'intérieur d'une boucle d'antenne (ou d'un périmètre) formée par les fils ou les spires constituant l'antenne.

Les expressions « plot intermédiaire de connexion » ou « plot intermédiaire » désignent un même élément.

L'invention concerne un module électronique selon la revendication 1.

La connexion entre un plot de connexion du circuit intégré et au moins une des pistes électriquement conductrices ou au moins un des puits de liaison est réalisée avec un fil en aluminium ou avec un fil d'or.

Le circuit intégré peut être une puce électronique.

L'invention concerne aussi un procédé de fabrication d'un module électronique selon la revendication 9.

Selon une variante de réalisation, on dépose lesdites pistes électriquement conductrices pour former au moins une antenne comprenant une première extrémité et une deuxième extrémité, et on réalise une connexion entre ledit plot intermédiaire de connexion avec au moins une extrémité externe de l'antenne via un premier fil de connexion et à au moins un plot de connexion du circuit intégré via un deuxième fil de connexion.

On peut aussi déposer électriquement le ou les plots intermédiaires de connexion lors de la création d'une ouverture centrale dans le substrat, ladite ouverture centrale ayant des dimensions choisies pour accueillir un circuit intégré.

La connexion entre au moins une piste électriquement conductrice ou un puits de liaison et au moins un des plots intermédiaires de connexion et entre au moins un des plots intermédiaires de connexion et un des plots d'au moins un circuit intégré peut être réalisée en utilisant un fil d'or ou un fil d'aluminium.

Le procédé peut comporter en outre une étape d'encapsulation des fils électriquement conducteurs, des plots intermédiaires de connexion et du circuit intégré à l'aide d'une résine de protection.

D'autres caractéristiques, détails et avantages de l'invention ressortiront à la lecture de la description faite en référence aux dessins annexés donnés à titre d'exemple non limitatifs et qui représentent, respectivement :
[Fig.1] La figure 1 est une illustration d'un premier exemple de réalisation du module électronique selon l'invention,
[Fig.2] La figure 2 est une vue agrandie du premier exemple de réalisation de la figure 1 ;
[Fig.3] La figure 3 est une variante des figures 1 et 2 avec un plot intermédiaire permettant de connecter la puce à un contact en surface du support, évitant le croisement de fils de connexion ;
[Fig. 4] La figure 4 est une variante de réalisation pour la forme d'un plot intermédiaire de connexion ;
[Fig.5] La figure 5 est une succession d'étapes mises en œuvre pour un exemple de procédé de fabrication du module électronique selon l'invention

La figure 1 illustre un module électronique 2 selon l'invention comprenant un substrat 20 sur lequel on dépose une ou plusieurs pistes conductrices 21 formant une antenne. Les pistes conductrices comprennent une première extrémité 21i formant l'extrémité interne de l'antenne 21 et une deuxième extrémité 21e formant l'extrémité externe de l'antenne 21. Une puce 22 est reliée via plusieurs plots de connexion 22p, d'une part à l'extrémité interne 21i de l'antenne 21 et à l'extrémité externe 21e de l'antenne 21 via un plot de connexion intermédiaire 25 sur au moins une face 21 du substrat 20 comme il sera détaillé par la suite et d'autre part à des puits de bonding 23j. La technique utilisée pour la connexion est une technique de câblage de fils de connexion 24, plus connue sous l'expression anglo-saxonne « wire bond ». Les fils de connexion peuvent être réalisés en aluminium, en or ou tout autre matériau conducteur électriquement permettant de connecter la puce avec l'antenne et les contacts en surface du support.

Le substrat 20 comprend un ou plusieurs plots de connexion dits « plots de connexion intermédiaires » 25. Pour des raisons de simplification, la figure 1 illustre le cas où l'on utilise un plot intermédiaire 25 pour connecter l'extrémité externe 21e de l'antenne 21 à un plot de connexion 22p de la puce. Le fil de connexion 24 habituellement constitué en une seule partie pour connecter la puce et l'extrémité externe de l'antenne, est divisé en deux, une première partie 241 qui relie l'extrémité externe 21e de l'antenne à une première zone 252 du plot intermédiaire 25 et une deuxième partie 242 qui relie une deuxième zone 251 du plot 25 intermédiaire à un plot 22e de la puce 22. De cette façon, la longueur de la partie du fil de connexion est inférieure à la longueur du fil reliant directement l'extrémité externe de l'antenne à la puce selon des techniques de l'art antérieur. Ceci permet, avantageusement, de diminuer la hauteur de la boucle du fil ainsi formée. Une troisième partie du fil de connexion 243 va relier l'extrémité interne 21i de l'antenne 21 à un plot 22i de la puce 22.

Une ouverture 26 peut être réalisée dans le substrat pour le passage du circuit intégré, par exemple. Ses dimensions sont choisies en conséquence. Sans sortir du cadre de l'invention, l'architecture selon l'invention peut aussi être mise en œuvre pour un substrat sans ouverture, où le circuit intégré est posé sur une des faces du substrat.

Sur la figure 1, un seul plot intermédiaire de connexion a été illustré. Ce plot intermédiaire de connexion peut être divisé en plusieurs plots, prenant différentes formes et qui sont répartis en différents endroits du substrat afin de permettre la connexion des fils, de diminuer la dimension de ces fils et d'éviter qu'ils se croisent. Le nombre de plots intermédiaire de connexion est notamment choisi en fonction du nombre et de la disposition de circuits intégrés disposés sur le substrat.

Dans le cas d'un fil de connexion réalisé en aluminium, l'agencement illustré à la figure 1 facilite la mise en place des fils et de leurs connexions, en permettant notamment de disposer en parallèle plusieurs fils de connexion.

Dans le cas d'un fil de connexion en or, cette structure offre plus de flexibilité dans le câblage, notamment dans le cas d'un module électronique comprenant plusieurs circuits intégrés ou puces.

Le (ou les) plot intermédiaire de connexion est un plot métallisé. L'antenne étant généralement réalisée en cuivre, la métallisation du plot sera composée, en plus du cuivre, de nickel et d'or ou de tout autre matériau permettant de réaliser une connexion électrique.

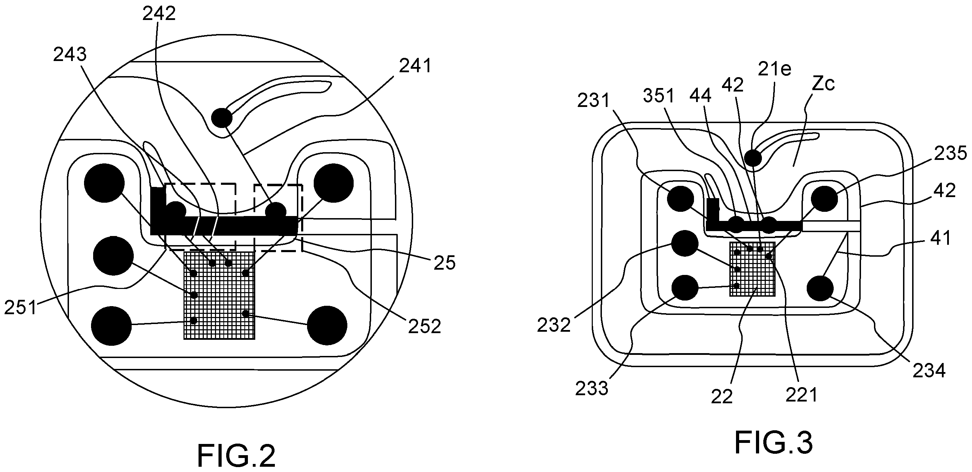

Afin de maintenir les fils de connexion en parallèle, notamment dans le cas de fils en aluminium, le plot intermédiaire de connexion pourra contenir au moins deux plots de connexion disposés de façon telle que, le fil de connexion entre l'extrémité externe de l'antenne avec le plot intermédiaire, le fil de connexion entre le plot intermédiaire et la puce, le fil de connexion entre l'extrémité interne de l'antenne et la puce soient disposés sensiblement parallèles les uns aux autres. La figure 2 illustre trois fils de connexion 241, 242, 243 sensiblement parallèles les uns aux autres.

La géométrie et les dimensions d'un plot intermédiaire de connexion seront choisies, notamment, en fonction du sens d'arrivée potentiel du fil de connexion. Par exemple, la forme du plot de connexion intermédiaire peut prendre une forme oblongue dans le sens parallèle à l'arrivée du fil de connexion. Les dimensions de ce plot intermédiaire de connexion sont choisies selon un compromis entre le coût de la métallisation du plot et la taille qui doit être suffisante pour accueillir un fil de connexion. La technique pour la connexion réalisée avec un fil d'or est connue sous l'expression « ball-wedge bonding » qui consiste à mettre une bille d'or sur la puce et un plot de fixation ou « wedge » sur le substrat. Pour la connexion réalisée avec un fil en aluminium, la technique est connue sous l'expression anglo-saxonne « wedge-wedge bonding » avec deux plots de fixation. Dans le cas d'une métallisation réalisée avec des métaux précieux on cherchera à diminuer le coût résultant de la métallisation et à optimiser le compromis coût/taille. Le dépôt de ces métaux précieux peut être réalisé par exemple par une électrodéposition sélective (ou selective plating en anglais).

Lors de la fabrication de l'antenne sur le substrat, le ou les plots de connexion intermédiaire sont reliés. Ainsi, lors de l'étape de dépôt des matériaux permettant la connexion filaire (généralement Nickel et Or), et nécessitant l'apport d'un courant, le ou les pots intermédiaires sont alimentés au même titre que l'antenne elle-même. L'isolation électrique de ces plots intermédiaires est réalisée, par exemple, lors de la découpe interne du substrat, permettant l'accès au contact en surface du substrat et la finalisation du module électronique. L'isolation électrique peut aussi être réalisée par la technique de poinçonnage plus connue sous l'abréviation anglo-saxonne "punch" lors du décourcircuitage ou du Test.

L'ensemble puce, antenne, sera par exemple protégé par une résine, non représentée pour des raisons de simplification de figure, selon des techniques connues de l'art antérieur. Par exemple, la résine sera déposée via la technique d'encapsulation connue sous l'abréviation anglo-saxonne « Dam and Fill », ou encore par moulage transfert. La résine pourra être une résine d'encapsulation de type enrobage ou « potting ». Il est aussi possible d'utiliser des résines de base epoxy connues sous le terme « glob top ».

La puce sera maintenue en place sur le support (substrat) d'antenne, par exemple au moyen d'un adhésif ou de toute autre technique connue de l'homme du métier.

La figure 3 illustre une variante de réalisation pour un puits de bonding (connexion à un contact ISO, sur la face contact) qui est à l'intérieur du faisceau de fils formant une antenne pour éviter des croisements de fils lors du câblage, et rendre universel un "design" de substrat ou de ruban (tape), pour raccourcir les fils. Dans cet exemple, un puits de bonding 234 est connecté à un plot 221 de la puce 22 via un premier fil de connexion 41 en une première zone d'un plot intermédiaire de connexion 42 et un deuxième fil de connexion 44 en une deuxième zone du même plot intermédiaire de connexion.

Dans le mode de réalisation particulier de la figure 3, l'antenne formée par les pistes électriquement conductrices 21 présente une zone de contournement Zc. Cette zone de contournement Zc est destinée à contourner l'extrémité externe 21e de l'antenne. Cette zone de contournement Zc s'étend vers l'intérieur de ladite antenne. Le plot de connexion intermédiaire suit ici partiellement la périphérie interne formée par l'antenne. Ce plot de connexion présente alors une forme complémentaire 351 à la zone de contournement Zc et l'entourant ainsi en partie. Plus particulièrement, la forme complémentaire 351 est ici partiellement incurvée. Dit autrement cette forme complémentaire 351 présente une forme de haricot.

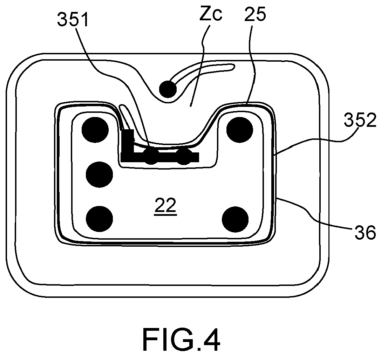

La figure 4 illustre une variante de réalisation de la figure 3 où la forme du plot intermédiaire 25 « suit » la totalité de la périphérie interne 36 formée par les pistes les plus au centre et constituant l'antenne. Le plot intermédiaire 25 présente une première partie ayant la forme complémentaire 351 ou forme de haricot et une seconde partie 352 sous la forme d'une piste électriquement conductrice. Cette seconde partie 352 s'étendant sur toute la périphérie interne 36 pour entourer entièrement le circuit intégré 22. Préférentiellement cette seconde partie 352 se présente sous la forme d'un ruban épais qui suit la périphérie interne des fils formant l'antenne. Un tel agencement permet notamment de connecter plus facilement les différents plots de la puce, qui peuvent être répartis sur le pourtour de la puce, à un ou plusieurs puits de bonding 231, 232, 233, 234, 235 (Fig.4), connecté(s) par exemple à une borne externe telle qu'une interface de communication de type ISO, en évitant un croisement des fils de connexion.

Sans sortir du cadre de l'invention, le module électronique peut comporter un substrat avec une antenne double, déposée sur chacune des faces du substrat.

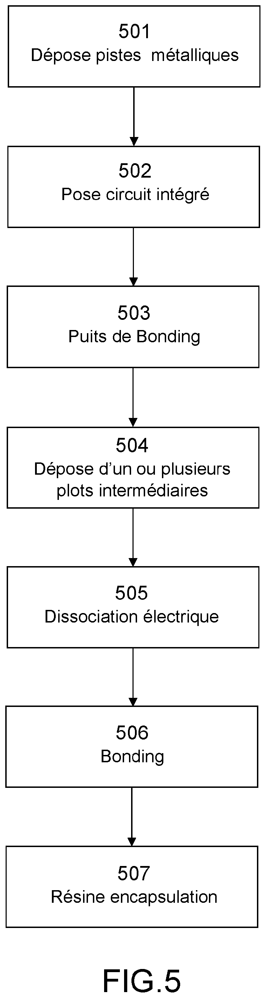

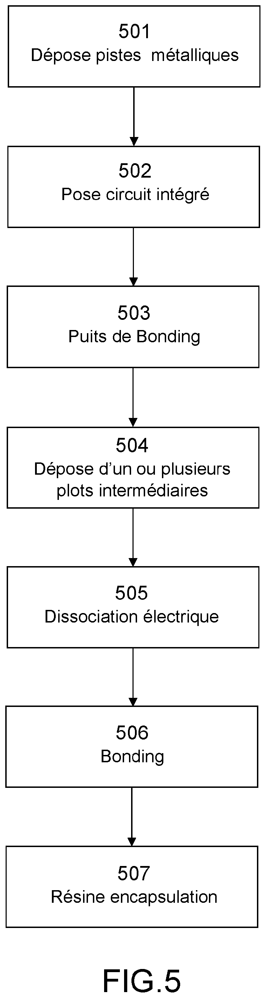

La figure 5 illustre un exemple de successions d'étapes pour la fabrication d'un module électronique selon l'invention pourra comporter, par exemple, les étapes suivantes :
501 - On dispose d'un substrat sur lequel on dépose selon une technique connue de l'homme du métier un ensemble de pistes métalliques sur au moins une face du substrat pour former, par exemple, une ou plusieurs antennes,

A titre d'exemple, pour réaliser un contact électriquement conducteur, on plongera une feuille de matériau dans une solution électrolytique et on rendra solidaire du substrat ladite feuille électriquement conducteur,
502 - On dépose au centre du substrat, au moins une puce ou circuit intégré,
503 - On réalise un ou plusieurs puits de bonding, cette étape étant facultative,
504 - On dépose un ou plusieurs plots intermédiaires de connexion dont les dimensions et la ou les positions sont choisies de façon telle que les connexions filaires entre les plots de la puce et les deux extrémités de l'antenne ne se croisent pas, et

Un plot intermédiaire est électriquement dissocié de l'antenne avant son raccordement par les fils de connexion. Par exemple, la dissociation électrique (isolement) est réalisée après les étapes de finition du substrat, de sorte que le plot intermédiaire de connexion dispose des couches de dépôt électrolytique nécessaires à la soudure filaire. Cette dissociation électrique 505 est par exemple réalisée lors de la création d'une ouverture centrale (26 figure 1) destinée à accueillir le circuit intégré à une altitude plus basse sur le produit fini,

On réalise la connexion entre au moins un des plots intermédiaires et une extrémité de l'antenne 21 et entre au moins un des plots intermédiaires avec un des plots 22p du circuit intégré 22, et/ou avec un puits de bonding, 506,
507 - On dépose une résine d'encapsulation pour protéger l'antenne et le circuit intégré.

Le substrat diélectrique est par exemple en verre-époxy, en Polyéthylène Téréphtalate, en Polyéthylène Naphthalate, en polyimide, etc.

Le module électronique ainsi obtenu peut être positionné dans une cavité du corps de carte dans une cavité du corps de carte en utilisant une colle thermofusible ou « hotmelt ».

Le module selon l'invention et son procédé de fabrication permettent d'offrir un module dans lequel la hauteur des boucles formées par les fils de connexion est inférieure aux hauteurs trouvées dans les modules électroniques de l'art antérieur. Ceci permet de rendre le module plus compact, de diminuer l'épaisseur de ce module. Une telle structure permet de faciliter le câblage avec des fils d'aluminium. La présence d'un plot intermédiaire évite le croisement des fils de connexion.

## Revendications

1. Module électronique (2) comportant :
- un substrat (20) sur lequel sont disposées plusieurs pistes électriquement conductrices (21) se présentant sous la forme de plusieurs boucles déposées sur une face dudit substrat (20) en formant au moins une antenne ;
- au moins un circuit intégré (22) comprenant plusieurs plots de connexion (22p) ; au moins un plot intermédiaire de connexion (25) situé sur une face (201) dudit substrat (20) et s'étendant sur au moins une partie de la périphérie interne (36) formée par lesdites pistes électriquement conductrices (21), ledit plot intermédiaire de connexion (25) étant connecté en un premier point auxdites pistes électriquement conductrices (21) ou à un puits de liaison (231, 232, 233) au niveau du substrat (20) au moyen d'un premier fil de connexion (241), et ledit plot intermédiaire de connexion (25) étant connecté en un deuxième point à au moins un plot dudit circuit intégré (22) au moyen d'un deuxième fil de connexion (242), et ledit plot intermédiaire de connexion (25) étant connecté à au moins une extrémité externe (21e) de ladite antenne via ledit premier fil de connexion (241) et à au moins un plot de connexion (22p) dudit circuit intégré (22) via ledit deuxième fil de connexion (242), **caractérisé en ce que** ledit plot intermédiaire de connexion (25) est situé sur la face (201) dudit substrat (20) portant lesdites pistes électriquement conductrices (21).

2. Module électronique selon la revendication 1, **caractérisé en ce qu'**il comporte un fil de connexion reliant l'extrémité externe (21e) de l'antenne (21) et un plot (22e) du circuit intégré (22), ledit fil de connexion étant composé d'une première partie (241) qui relie l'extrémité externe (21e) de l'antenne à une première zone (251) du plot intermédiaire de connexion (25) et d'une deuxième partie (242) qui relie une deuxième zone (252) du plot (25) intermédiaire de connexion au plot (22e) du circuit intégré (22).

3. Module électronique selon l'une des revendications précédentes, **caractérisé en ce que** la connexion entre un plot de connexion (22p) du circuit intégré (22) et au moins une des pistes électriquement conductrices (21) ou au moins un des puits de liaison est réalisée avec un fil en aluminium.

4. Module électronique selon l'une des revendications 1 à 2, **caractérisé en ce que** la connexion entre un plot de connexion (22p) du circuit intégré (22) et au moins une des pistes électriquement conductrices (21) ou au moins un des puits de liaison est réalisée avec un fil d'or.

5. Module électronique selon l'une des revendications 1 à 4, **caractérisé en ce que** le circuit intégré (22) est une puce électronique.

6. Module électronique selon l'une quelconque des revendications 1 à 5, **caractérisé en ce que** l'antenne formée par lesdites pistes électriquement conductrices (21) présente une zone de contournement (Zc) destinée à contourner l'extrémité externe (21e) de l'antenne, ladite zone de contournement (Zc) s'étendant vers l'intérieur de ladite antenne, et **en ce que** le plot de connexion intermédiaire (25) a une forme complémentaire (351) à ladite zone de contournement (Zc).

7. Module électronique selon la revendication 6, dans lequel la forme complémentaire (351) est partiellement incurvée.

8. Module électronique selon l'une quelconque des revendications 6 ou 7, dans lequel le plot de connexion intermédiaire (25) comprend une piste électriquement conductrice (352) s'étendant sur ladite périphérie interne (36) pour entourer entièrement le circuit intégré (22).

9. Procédé de fabrication d'un module électronique (2) selon l'une quelconque des revendications 1 à 8, comportant au moins les étapes suivantes :
- On dispose sur au moins une face d'un substrat (20) au moins une piste électriquement conductrice (21),
- On dépose sur ledit substrat (20) au moins un circuit intégré (22) comprenant au moins un plot de connexion (22p),
**caractérisé en ce que** :
- On réalise au moins un plot intermédiaire de connexion (25) configuré pour assurer une connexion entre ledit au moins un plot de connexion (22p) et ladite au moins une piste électriquement conductrice (21) ou un puits de liaison (231, 232, 233) du substrat (20), de sorte qu'au moins un plot intermédiaire de connexion (25) s'étende sur au moins une partie de la périphérie interne (36) formée par ladite au moins une piste électriquement conductrice (21),
- On dissocie électriquement ledit au moins un plot intermédiaire de connexion (25) de ladite au moins une piste électriquement conductrice (21) ou dudit puits de liaison (231, 232, 233),
- On réalise la connexion entre ledit au moins un des plots intermédiaires de connexion (25) et ladite au moins une piste électriquement conductrice (21) ou ledit au moins un puits de liaison (231, 232, 233) à l'aide d'un premier fil de connexion, et on réalise également la connexion entre au moins un des plots intermédiaires de connexion (25) et un des plots (22p) dudit au moins un circuit intégré (22) à l'aide d'un deuxième fil de connexion.

10. Procédé selon la revendication 9, **caractérisé en ce que** l'on dépose ladite au moins une piste électriquement conductrice (21) pour former au moins une antenne comprenant une première extrémité (21i) et une deuxième extrémité (21e), et on réalise une connexion entre ledit plot intermédiaire de connexion (25) et au moins une extrémité externe (21e) de ladite antenne via un premier fil de connexion (241), et avec au moins un plot de connexion (22p) du circuit intégré (22) via un deuxième fil de connexion (242).

11. Procédé selon l'une des revendications 9 ou 10, **caractérisé en ce que** l'on dissocie électriquement ledit au moins un plot intermédiaire de connexion (25) lors de la création d'une ouverture centrale (26) dans le substrat (20), ladite ouverture centrale étant destinée à accueillir ledit au moins un circuit intégré (22).

12. Procédé selon l'une des revendications 9 à 11, **caractérisé en ce que** le premier ou le deuxième fil de connexion est un fil d'or ou un fil d'aluminium.

13. Procédé selon l'une des revendications 9 à 12, **caractérisé en ce qu'**il comporte en outre une étape d'encapsulation desdites pistes électriquement conductrices (21), des plots intermédiaires de connexion (25) et du circuit intégré (22) à l'aide d'une résine de protection.

## Patentansprüche

1. Elektronisches Modul (2), umfassend:
- ein Substrat (20), auf dem mehrere elektrisch leitende Bahnen (21) angeordnet sind, die sich in Form von mehreren Schleifen präsentieren, die auf einer Seite des Substrats (20) abgeschieden sind, wobei sie mindestens eine Antenne bilden;
- mindestens eine integrierte Schaltung (22), die mehrere Verbindungspads (22p) umfasst;
wobei sich mindestens ein Zwischenverbindungspad (25) auf einer Seite (201) des Substrats (20) befindet und sich über mindestens einen Teil des Innenumfangs (36), der von den elektrisch leitenden Bahnen (21) gebildet wird, erstreckt, wobei das Zwischenverbindungspad (25) an einem ersten Punkt mittels eines ersten Verbindungsdrahts (241) mit den elektrisch leitenden Bahnen (21) oder mit einem Verbindungsschacht (231, 232, 233) am Substrat (20) verbunden ist, und wobei das Zwischenverbindungspad (25) an einem zweiten Punkt mittels eines zweiten Verbindungsdrahts (242) mit mindestens einem Pad der integrierten Schaltung (22) verbunden ist, und wobei das Zwischenverbindungspad (25) über den ersten Verbindungsdraht (241) mit mindestens einem äußeren Ende (21e) der Antenne und über den zweiten Verbindungsdraht (242) mit mindestens einem Verbindungspad (22p) der integrierten Schaltung (22) verbunden ist, **dadurch gekennzeichnet, dass** sich das Zwischenverbindungspad (25) auf der Seite (201) des Substrats (20) befindet, die die elektrisch leitenden Bahnen (21) trägt.

2. Elektronisches Modul nach Anspruch 1, **dadurch gekennzeichnet, dass** es einen Verbindungsdraht umfasst, der das äußere Ende (21e) der Antenne (21) und ein Pad (22e) der integrierten Schaltung (22) verbindet, wobei der Verbindungsdraht aus einem ersten Teil (241), der das äußere Ende (21e) der Antenne mit einem ersten Bereich (251) des Zwischenverbindungspads (25) verbindet, und einem zweiten Teil (242) zusammengesetzt ist, der einen zweiten Bereich (252) des Zwischenverbindungspads (25) mit dem Pad (22e) der integrierten Schaltung (22) verbindet.

3. Elektronisches Modul nach einem der vorstehenden Ansprüche, **dadurch gekennzeichnet, dass** die Verbindung zwischen einem Verbindungspad (22p) der integrierten Schaltung (22) und mindestens einer der elektrisch leitenden Bahnen (21) oder mindestens einem der Verbindungsschächte mit einem Aluminiumdraht hergestellt ist.

4. Elektronisches Modul nach einem der Ansprüche 1 bis 2, **dadurch gekennzeichnet, dass** die Verbindung zwischen einem Verbindungspad (22p) der integrierten Schaltung (22) und mindestens einer der elektrisch leitenden Bahnen (21) oder mindestens einem der Verbindungsschächte mit einem Golddraht hergestellt ist.

5. Elektronisches Modul nach einem der Ansprüche 1 bis 4, **dadurch gekennzeichnet, dass** die integrierte Schaltung (22) ein elektronischer Chip ist.

6. Elektronisches Modul nach einem der Ansprüche 1 bis 5, **dadurch gekennzeichnet, dass** die Antenne, die von den elektrisch leitenden Bahnen (21) gebildet wird, einen Umgehungsbereich (Zc) aufweist, der dazu bestimmt ist, das äußere Ende (21e) der Antenne zu umgehen, wobei sich der Umgehungsbereich (Zc) zur Innenseite der Antenne hin erstreckt, und dadurch, dass das Zwischenverbindungspad (25) eine zum Umgehungsbereich (Zc) komplementäre Form (351) aufweist.

7. Elektronisches Modul nach Anspruch 6, wobei die komplementäre Form (351) teilweise gekrümmt ist.

8. Elektronisches Modul nach einem der Ansprüche 6 oder 7, wobei das Zwischenverbindungspad (25) eine elektrisch leitende Bahn (352) umfasst, die sich so über den Innenumfang (36) erstreckt, dass sie die integrierte Schaltung (22) vollständig umgibt.

9. Verfahren zur Herstellung eines elektronischen Moduls (2) nach einem der Ansprüche 1 bis 8, das mindestens die folgenden Schritte umfasst:
- Anordnen mindestens einer elektrisch leitenden Bahn (21) auf mindestens einer Seite eines Substrats (20),
- Abscheiden mindestens einer integrierten Schaltung (22), die mindestens ein Anschlusspad (22p) umfasst, auf dem Substrat (20),
**dadurch gekennzeichnet, dass**:
- mindestens ein Zwischenverbindungspad (25), das so konfiguriert ist, dass es eine Verbindung zwischen dem mindestens einen Verbindungspad (22p) und der mindestens einen elektrisch leitenden Bahn (21) oder einem Verbindungsschacht (231, 232, 233) des Substrats (20) sicherstellt, so hergestellt wird, dass sich mindestens ein Zwischenverbindungspad (25) über mindestens einen Teil des Innenumfangs (36), der von der mindestens einen elektrisch leitenden Bahn (21) gebildet wird, erstreckt,
- das mindestens eine Zwischenverbindungspad (25) elektrisch von der mindestens einen elektrisch leitenden Bahn (21) oder dem Verbindungsschacht (231, 232, 233) getrennt wird,
- die Verbindung zwischen dem mindestens einen der Zwischenverbindungspads (25) und der mindestens einen elektrisch leitenden Bahn (21) oder dem mindestens einen Verbindungsschacht (231, 232, 233) mithilfe eines ersten Verbindungsdrahts hergestellt wird, und auch die Verbindung zwischen mindestens einem der Zwischenverbindungspads (25) und einem der Pads (22p) der mindestens einen integrierten Schaltung (22) mithilfe eines zweiten Verbindungsdrahts hergestellt wird.

10. Verfahren nach Anspruch 9, **dadurch gekennzeichnet, dass** die mindestens eine elektrisch leitende Bahn (21) so abgeschieden wird, dass sie mindestens eine Antenne bildet, die ein erstes Ende (21i) und ein zweites Ende (21e) umfasst, und eine Verbindung zwischen dem Zwischenverbindungspad (25) und mindestens einem äußeren Ende (21e) der Antenne über einen ersten Verbindungsdraht (241), und mit mindestens einem Verbindungspad (22p) der integrierten Schaltung (22) über einen zweiten Verbindungsdraht (242) hergestellt wird.

11. Verfahren nach einem der Ansprüche 9 oder 10, **dadurch gekennzeichnet, dass** bei der Erzeugung einer zentralen Öffnung (26) im Substrat (20) das mindestens eine Zwischenverbindungspad (25) elektrisch getrennt wird, wobei die zentrale Öffnung dazu bestimmt ist, die mindestens eine integrierte Schaltung (22) aufzunehmen.

12. Verfahren nach einem der Ansprüche 9 bis 11, **dadurch gekennzeichnet, dass** der erste oder der zweite Verbindungsdraht ein Golddraht oder ein Aluminiumdraht ist.

13. Verfahren nach einem der Ansprüche 9 bis 12, **dadurch gekennzeichnet, dass** es weiter einen Schritt des Verkapselns der elektrisch leitenden Bahnen (21), der Zwischenverbindungspads (25) und der integrierten Schaltung (22) mithilfe eines Schutzharzes umfasst.

## Claims

1. An electronic module (2) including:
- a substrate (20) on which several electrically-conductive tracks (21) in the form of several loops deposited over a face of said substrate (20) forming at least one antenna are arranged;
- at least one integrated circuit (22) comprising several connecting pads (22p);
at least one intermediate connecting pad (25) located on a face (201) of said substrate (20) and extending over at least one portion of the inner periphery (36) formed by said electrically-conductive tracks (21), said intermediate connecting pad (25) being connected at a first point to said electrically-conductive tracks (21) or to a connection well (231, 232, 233) at the level of the substrate (20) by means of a first connecting wire (241), and said intermediate connecting pad (25) being connected at a second point to at least one pad of said integrated circuit (22) by means of a second connecting wire (242), and said intermediate connecting pad (25) being connected to at least one outer end (21e) of said antenna via said first connecting wire (241) and to at least one connecting pad (22p) of said integrated circuit (22) via said second connecting wire (242), **characterized in that** said intermediate connecting pad (25) is located on the face (201) of said substrate (20) carrying said electrically conductive wires (21).

2. The electronic module according to claim 1, **characterized in that** it includes a connecting wire connecting the outer end (21e) of the antenna (21) and a pad (22e) of the integrated circuit (22), said connecting wire being composed of a first portion (241) which connects the outer end (21e) of the antenna to a first area (251) of the intermediate connecting pad (25) and a second portion (242) which connects a second area (252) of the intermediate connecting pad (25) to the pad (22e) of the integrated circuit (22).

3. The electronic module according to one of the preceding claims, **characterized in that** the connection between a connecting pad (22p) of the integrated circuit (22) and at least one of the electrically-conductive tracks (21) or at least one of the connection wells is made with an aluminum wire.

4. The electronic module according to one of claims 1 to 2, **characterized in that** the connection between a connecting pad (22p) of the integrated circuit (22) and at least one of the electrically-conductive tracks (21) or at least one of the connection wells is made with a gold wire.

5. The electronic module according to one of claims 1 to 4, **characterized in that** the integrated circuit (22) is an electronic chip.

6. The electronic module according to any one of claims 1 to 5, **characterized in that** the antenna formed by the electrically-conductive tracks (21) has a bypass area (Zc) intended to bypass the outer end (21e) of the antenna, said bypass area (Zc) extending towards the inside of said antenna, and **in that** the intermediate connecting pad (25) has a complementary shape (351) to said bypass area (Zc).

7. The electronic module according to claim **6,** wherein the complementary shape (351) is partially curved.

8. The electronic module according to any one of claims 6 **or 7,** wherein the intermediate connecting pad (25) comprises an electrically-conductive track (352) extending over said inner periphery (36) to fully surround the integrated circuit (22).

9. A method for manufacturing an electronic module (2) according to any one of claims 1 to 8, including at least the following steps of:
- at least one electrically-conductive track (21) is arranged on at least one face of a substrate (20),
- at least one integrated circuit (22) comprising at least one connecting pad (22p) is deposited over said substrate (20),
**characterized in that**:
- at least one intermediate connecting pad (25) configured to ensure a connection between said at least one connecting pad (22p) and said at least one electrically-conductive track (21) or a connection well (231, 232, 233) of the substrate (20) is made, so that at least one intermediate connecting pad (25) extends over at least one portion of the inner periphery (36) formed by said at least one electrically-conductive track (21),
- said at least one intermediate connecting pads (25) is electrically dissociated from said at least one electrically-conductive track (21) or from said connection well (231, 232, 233),
- the connection between said at least one of the intermediate connecting pads (25) and said at least one electrically-conductive track (21) or said at least one connection well (231, 232, 233) is made using a first connecting wire, and the connection between at least one of the intermediate connecting pads (25) and one of the pads (22p) of said at least one integrated circuit (22) is also made using a second connecting wire.

10. The method according to claim 9, **characterized in that** said electrically-conductive tracks (21) are deposited to form at least one antenna comprising a first end (21i) and a second end (21e), and a connection is made between said intermediate connecting pad (25) and at least one outer end (21e) of said antenna via a first connecting wire (241), and with at least one connecting pad (22p) of the integrated circuit (22) via a second connecting wire (242).

11. The method according to one of the claims 9 or 10, **characterized in that** said at least one intermediate connecting pads (25) is electrically dissociated upon creation of a central opening (26) in the substrate (20), said central opening being intended to receive said at least one integrated circuit (22).

12. The method according to one of claims 9 to 11, **characterized in that** the first or second connecting wire is a gold wire or an aluminum wire.

13. The method according to one of claims 9 to 12, **characterized in that** it further includes a step of encapsulating said electrically-conductive tracks (21), the intermediate connecting pads (25) and the integrated circuit (22) using a protective resin.
